# EUROPEAN PATENT APPLICATION

(11) **EP 3 800 691 A1**
(43) Date of publication of application: **07.04.2021**
(21) Application number: 19201295.3
(22) Date of filing: 03.10.2019
(51) Int. Cl.: H01M 2/10, H01M 2/20, H01M 10/613

(54) **CURRENT COLLECTOR, BATTERY MODULE WITH A CURRENT COLLECTOR AND USAGE THEREOF**

(71) Applicant: Siemens Aktiengesellschaft, 80333 München (DE)
(72) Inventor: Villányi, Imre, 1202 Budapest (HU); Lukacs, Andras, 1119 Budapest (HU); Veres-Szekely, Vidor, 7257 Mosdós (HU); Balazs, Gergely György, 1034 Budapest (HU); Debreceni, Tibor, 1125 Budapest6 (HU)
(74) Representative: Maier, Daniel Oliver

(57) **Abstract**

Current collector (21) for a battery module, comprising an elongated, electrically conductive structure with two ends, having a main terminal (31) at a first end of the conductive structure, and a last cell bus bar terminal (45) the second end of the conductive structure, and a first cell bus bar terminal (41) between the main terminal (31) and the last cell bus bar terminal (45), and the conductive structure has an initial cross section (25) at the main terminal (30), and the conductive structure has a first cross section (26) at the first cell bus bar terminal, and the conductive structure has a final cross section (27) at the last cell bus bar terminal, wherein the initial cross section (25) is larger than the final cross section (27), and the first cross section (26) is larger than the final cross section (27) but not larger than the initial cross section (25).

## Description

The invention relates to a current collector for a battery module, comprising an elongated, electrically conductive structure with two ends, having a main terminal for connecting an electric load at a first end of the conductive structure, and a last cell bus bar terminal for connecting battery cells at the second end of the conductive structure, and a first cell bus bar terminal for connecting battery cells between the main terminal and the last cell bus bar terminal, and the conductive structure has an initial cross section at the main terminal, traversal to the elongation of the conductive structure, and the conductive structure has a first cross section at the first cell bus bar terminal, traversal to the elongation of the conductive structure, and the conductive structure has a final cross section at the last cell bus bar terminal, traversal to the elongation of the conductive structure.

The invention relates to also to a battery module with a current collector and a usage thereof.

Battery systems, in particular for aircraft propulsion systems, being lightweight is a major aspect of mechanical design.

In prior art, battery parts are designed to fulfill requirement e.g. regarding maximum currents to limit temperature radiation, which leads due to the given resistance of selected materials mostly to a high weight of the battery. For instance, extruded profiles with constant cross section along the longitudinal elongation are mostly used as current rails, i.e. bus bars, because of cost advantages.

In electric aircraft propulsion systems, weight reduction solutions are a key of reaching high energy densities. Normally used sheet metal like copper, aluminum, etc. for components such as busbars, cables and current collectors can be heavy.

It is the objective of the invention to save weight at battery modules and in particular at current collectors of battery modules.

The objective of the invention is achieved by a current collector according to the preamble of claim 1, wherein the initial cross section is larger than the final cross section, and the first cross section is larger than the final cross section but not larger than the initial cross section.

Thus, the profile of the current collector, which is also a bus bar, on which very high total currents from all of the battery cells can flow, is optimized regarding weight and still providing the necessary cross section for maximum load currents the collector is designed for. The cross section is the effective area at a cut traversal to the elongation of the conductive current collector structure.

In the context of the present invention, the current collector is the common supply line, i.e. a supply bus bar between the main terminal and the cell bus bars of the battery module, but in some cases also with battery cells. Mainly, the battery cells are connected to respective cell bus bars. In some embodiments, battery cells are also directly connected to the current collector, e.g. via bonding wires.

To obtain a preferred ratio between dimensions, weight and electrical conductivity, the current collector beneficially is of metal with an electrical specific resistance better than 0,05 · 10⁻⁶ Ω*m* at 20°C, i.e. an electric conductivity of better than 20 · 10^{6 *S*}/*ₘ*.

Moreover, it is beneficial, if the electrical specific resistance is better than 0,03 · 10⁻⁶ Ω*m* at 20°C.

The specific resistance can be achieved by metals, for instance silver, copper, gold or aluminum as material for the current collector.

In the context of the present invention, said terminals are contact points for connecting electrically cell bus bars to first, intermediate and last cell bus bar terminals or a load to the main terminal. The terminals are connection points providing a very low contact resistance for said electrical connections. It can be for instance a polished and/or plated area on the current collector metal structure to enable soldering or welding e.g. a respective wire, a respective plug, a plug-in or screw terminal, a clamp, etc. The plating should provide a protection against oxidation of the terminal area.

A suitable surface of the terminals is for instance non-passivated, non-oxidized plain metal area, or plated with a non-oxidizing material like gold or nickel.

Preferably, when using a releasable connection between said terminal and the respective counterpart, at the plain metal area an electrically conductive mounting paste between the releasable parts, where the load current flows.

At the current collector the highest total current flows and the highest cross section of the conductive structure is required. Thus, the weight saving measure according to the invention leads to the highest improvement.

Moreover, by the dimensions of the initial cross section, easy manufacturing is supported, since the chosen profile along the elongation can be applied between the main terminal and the last cell bus bar terminal. This can apply for instance by simple manufacturing methods like straight sawing, cutting, shearing or punching, but also laser cutting or water jet cutting.

If the current collector provides in one dimension, traversal to the elongation of the conductive structure, a constant value, the traversal dimension can have a varying width to provide in sum a varying cross section along the elongation of the conductive structure.

In the context of the present invention, an elongation of the conductive structure means, that the structure is longitudinally longer than one of the dimensions traversal to the longitudinal elongation of the conductive structure.

It is beneficial, that the longitudinal elongation is at least ten times, preferably at least twenty times, more preferably at least thirty, fifty or even hundred times longer than one of the dimensions traversal to the longitudinal elongation of the conductive structure.

It is clear, that the cross section can also vary in both dimensions traversal to the elongation of the conductive structure along its elongation.

Cell bus bars are structures to connect several individual battery cells to groups, in a parallel or a serial architecture or a combination thereof. Cell bus bars structures can be realized for instance by printed circuit boards and the battery cells are connected to the printed circuit boards by wires.

In the context of the present invention are cell bus bar terminals points at the current collector, where the cell bus bar structures are connected to the current collector, for instance by wires.

In an embodiment of the invention, the location of the main terminal can be identical to the location of the first cell bus bar terminal.

It is clear, that the first and the second end of the conductive structure need not necessarily be the physical ends of the current collector, but be the locations along the elongation, where terminals, e.g. a main, a first or a last terminal, are located. With other words, a physical protrusion apart the logical or effective end of the elongated conductive structure does not influence the effective location of the respective terminals. Thus, for instance a mechanical extension at the end of the current collector can be provided for fixing the current collector mechanically by a mounting opening with a respectively large edging, but which does not carry a battery module current and consequently is not extending the cross section of the current collector for its intended use according to the invention.

Thus, the location of the connection of the main terminal with the conductive structure defines the effective first end of the conductive elongated structure as said first end.

Analogous, the location of the connection of the last cell bus bar terminal with the conductive structure defines the effective second end of the conductive elongated structure as said second end.

In a further development of the invention the initial cross section equals the first cross section.

This can be beneficial whether the main terminal is designed as a part of an electrical connector like a plug, or other mechanical design requirements of connecting the battery module to electric loads.

Thus, a further weight optimization is obtained, potentially taking slightly higher manufacturing efforts into account. However, when using for instance computer aided laser cutting or punching for manufacturing such a current collector, there is even no higher manufacturing effort.

In a further development of the invention the current collector further comprises at least one intermediate cell bus bar terminal for connecting battery cells between the first cell bus bar terminal and the last cell bus bar terminal, and the conductive structure has a respective intermediate cross section at the at least one intermediate cell bus bar terminal, traversal to the elongation of the conductive structure, and the respective intermediate cross section is longer than the final cross section, but not longer than the first cross section.

Thus, several cell bus bar terminals can be incorporated into a battery module, and each cell bus bar terminal can be considered optimally at the current collector. It is also possible, that one or more battery cells are directly connected to the at least one intermediate cell bus bar terminal, e.g. via a bonding wire.

In a further development of the invention the conductive structure provides a linear taper along the elongation of the conductive structure in the cross section, traversal to the elongation of the conductive structure and between the first cross section and the final cross section.

Thus, easy manufacturing of the current collector is provided, since the linear profile along the elongation can be applied between the main terminal and the last cell bus bar terminal. This can apply for instance by simple manufacturing methods like straight sawing, cutting, shearing or punching, but also laser cutting or water jet cutting of base materials with a constant thickness.

In a further development of the invention the conductive structure provides a stepped taper along the elongation of the conductive structure in the cross section, traversal to the elongation of the conductive structure and between the first cross section and the final cross section.

Thus, further weight saving of the current collector is provided, potentially taking slightly higher manufacturing efforts into account. However, when using for instance computer aided laser cutting or punching of base materials with a constant thickness for manufacturing such a current collector, there is even no higher manufacturing effort.

The problem of the invention is also solved by a battery module, comprising a multiplicity of cells, a first cell bus bar terminal, and a last cell bus bar terminal, wherein each busbar is connected to respective cells of the multiplicity of cells, and a current collector according to the invention.

The problem of the invention is also solved by a usage of a battery module according to the invention within an aircraft, preferably at an aircraft with an electric propulsion system, which is supplied by the battery module, i.e. to drive the electric propulsion of the aircraft.

The invention will be explained in more detail with reference to an embodiment shown in the accompanying drawings. In the drawings show:
- Fig. 1: a perspective view of an embodiment of a battery module according to the invention,
- Fig. 2: a front view of a first embodiment of a current collector according to the invention,
- Fig. 3: a front view of a second embodiment of a current collector according to the invention.

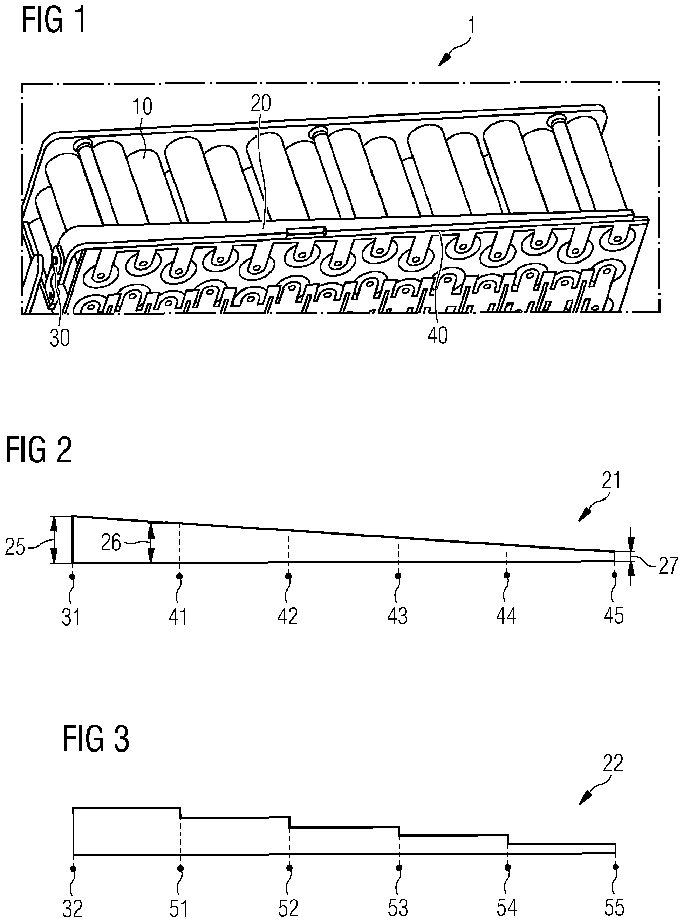

**Fig. 1** shows a perspective view of an embodiment of a battery module 1 according to the invention.

The battery module 1 comprises a multiplicity of cells 10.

Busbars connect respective cells of the multiplicity of cells 10 and provide respective busbar terminals 40.

The battery module 1 comprises further an elongated current collector 20, which is connected to the respective busbar terminals 40. The current collector 20 has a main terminal 30 at one end.

The current collector collects the currents from the cells of the multiplicity of cells 10, when an electric load is connected to the main terminal 30.

**Fig. 2** shows a front view of a first embodiment of a current collector 21 according to the invention.

The current collector 21 e.g. for a battery module 1 comprises an elongated, electrically conductive structure with two ends.

The conductive structure has a main terminal 31 for connecting an electric load at a first end of the conductive structure.

Moreover, the conductive structure has a last cell bus bar terminal 45 for connecting battery cells at the second end of the conductive structure.

Further, the conductive structure has a first cell bus bar terminal 41 for connecting battery cells between the main terminal 31 and the last cell bus bar terminal 45.

The conductive structure has an initial cross section 25 at the main terminal 31, traversal to the elongation of the conductive structure.

The conductive structure has a first cross section 26 at the first cell bus bar terminal 41, traversal to the elongation of the conductive structure.

The conductive structure has a final cross section 27 at the last cell bus bar terminal 45, traversal to the elongation of the conductive structure.

The initial cross section 25 is larger than the final cross section 27, and the first cross section 26 is larger than the final cross section 27 but not larger than the initial cross section 25.

The conductive structure provides a linear taper along the elongation of the conductive structure in the cross section, traversal to the elongation of the conductive structure and between the initial cross section 25, the first cross section 26 and the final cross section 27.

In a further, not shown embodiment of the invention, the initial cross section of the current collector equals the first cross section.

The current collector 21 further comprises three intermediate cell bus bar terminals 42-44 for connecting further battery cells between the first cell bus bar terminal 41 and the last cell bus bar terminal 45.

The current collector 21 is made of Aluminum for low weight and sufficiently high conductivity.

The conductive structure has a respective intermediate cross section at the intermediate cell bus bar terminals 42-44, traversal to the elongation of the conductive structure.

The respective intermediate cross section is larger than the final cross section 27, but not larger than the first cross section 26.

**Fig. 3** shows a front view of a first embodiment of a current collector 22 according to the invention.

The conductive structure provides a stepped taper along the elongation of the conductive structure in the cross section, traversal to the elongation of the conductive structure and between the initial cross section at a main terminal 32 i.e. the first cross section at a first cell bus bar terminal 51 and the final cross section at a last cell bus bar terminal 55.

The current collector 22 further comprises three intermediate cell bus bar terminals 52-54 for connecting further battery cells between the first cell bus bar terminal 51 and the last cell bus bar terminal 55.

The conductive structure has a respective intermediate cross section at the intermediate cell bus bar terminals 52-54, traversal to the elongation of the conductive structure.

### List of reference numerals:

- 1: battery module
- 10: battery cells
- 20-22: current collector
- 25: initial cross section of current collector at the main terminal
- 26: first cross section of current collector at the first cell bus bar terminal
- 27: final cross section of current collector at the last cell bus bar terminal
- 30-32: main terminal of current collector
- 41, 51: first cell bus bar terminal of the battery cells
- 40, 42-44, 52-54: cell bus bar terminal of the battery cells, intermediate cell bus bar terminals
- 45, 55: last or final cell bus bar terminal of the battery cells

## Claims

1. Current collector (20-22) for a battery module (1), comprising an elongated, electrically conductive structure with two ends, having
a main terminal (30-32) for connecting an electric load at a first end of the conductive structure, and
a last cell bus bar terminal (45, 55) for connecting battery cells at the second end of the conductive structure, and
a first cell bus bar terminal (41, 51) for connecting battery cells between the main terminal (30-32) and the last cell bus bar terminal (45, 55), and
the conductive structure has an initial cross section (25) at the main terminal (30-32), traversal to the elongation of the conductive structure, and
the conductive structure has a first cross section (26) at the first cell bus bar terminal, traversal to the elongation of the conductive structure, and
the conductive structure has a final cross section (27) at the last cell bus bar terminal, traversal to the elongation of the conductive structure,
**characterized in that** the initial cross section (25) is larger than the final cross section (27), and the first cross section (26) is larger than the final cross section (27) but not larger than the initial cross section (25).

2. A current collector (20-22) according to the preceding claim, wherein the initial cross section (25) equals the first cross section (26).

3. A current collector (20-22) according to one of the preceding claims, wherein the current collector (20-22) provides a specific resistance better than 0,05 · 10⁻⁶ Ω*m* at 20°C, preferably better than 0,03 · 10⁻⁶ Ω*m*.

4. A current collector (20-22) according to one of the preceding claims, wherein the current collector (20-22) further comprises at least one intermediate cell bus bar terminal (42-44, 52-54) for connecting battery cells between the first cell bus bar terminal (41, 51) and the last cell bus bar terminal (45, 55), and the conductive structure has a respective intermediate cross section at the at least one intermediate cell bus bar terminal (42-44, 52-54), traversal to the elongation of the conductive structure, and the respective intermediate cross section is longer than the final cross section (27), but not longer than the first cross section (26).

5. A current collector (20-22) according to the claims 1-3, wherein the conductive structure provides a linear taper along the elongation of the conductive structure in the cross section, traversal to the elongation of the conductive structure and between the first cross section (26) and the final cross section (27).

6. A current collector (20-22) according to the claims 1-3, wherein the conductive structure provides a stepped taper along the elongation of the conductive structure in the cross section, traversal to the elongation of the conductive structure and between the first cross section (26) and the final cross section (27).

7. Battery module (1), comprising a multiplicity of cells (10), a first cell bus bar terminal (41, 51) and a last cell bus bar terminal (45, 55), wherein each busbar (41, 45, 51, 55) is connected to respective cells of the multiplicity of cells (10), and a current collector (1) according to one of the preceding claims.

8. Usage of a battery module (1) according to the preceding claim within an aircraft, preferably at an aircraft with an electric propulsion system, which is supplied by the battery module (1).
